Europäisches Patentamt

**European Patent Office**

Office européen des brevets

(11) Publication number: **0 070 606**
A2

# (12) EUROPEAN PATENT APPLICATION

(21) Application number: **82200905.6**

(22) Date of filing: **14.07.82**

(51) Int. Cl.³: **B 07 B 1/28,** B 07 B 1/42

(30) Priority: **20.07.81 NL 8103421**

(43) Date of publication of application: **26.01.83**
**Bulletin 83/4**

(84) Designated Contracting States: **AT BE CH DE FR GB IT LI LU NL SE**

(71) Applicant: **Schriek, Willem, Trading as Schriek Engineering Buitenplein 6, NL-1181 ZB Amstelveen (NL)**

(72) Inventor: **Schriek, Willem, Trading as Schriek Engineering Buitenplein 6, NL-1181 ZB Amstelveen (NL)**

(74) Representative: **Jacobson, Gerard et al, Octrooibureau Los en Stigter B.V. Postbus 20052, NL-1000 HB Amsterdam (NL)**

(54) Swing sieve.

(57) The invention relates to a shaking sieve, comprising a fixed lower frame and an inclined chamber, which may be driven by an eccentric which is supported by the lower frame and which engages the sifting chamber near the upper end of the sifting chamber and which also forms a first support for the sifting chamber, while the sifting chamber is movably supported near the lower end at both sides by support elements connected to the lower frame, whereby a balance wheel is connected with the eccentric and is provided with balance weights, which are displaceable with respect to the balance wheel and may be locked in different positions, while a drive means takes care of the drive of the eccentric and the balance wheel.

According to the invention the balance wheel is also constructed as the drive wheel, with which the drive means is in driving connection.

Shaking sieve.

The invention relates to a shaking sieve, comprising a fixed lower frame and an inclined sifting chamber, which may be driven by an eccentric which is supported by the lower frame and which engages the sifting chamber near the upper end of the sifting chamber and which also forms a first support for the sifting chamber, while the sifting chamber is movably supported near the lower end at both sides by support elements connected to the lower frame, whereby a balance wheel is connected with the eccentric and is provided with balance weights, which are displaceable with respect to the balance wheel and may be locked in different positions, while a drive means takes care of the drive of the eccentric and the balance wheel.

In a known embodiment of a shaking sieve of this type the balance wheel consists of a disk, which is mounted on the drive shaft of the eccentric and which is provided at the upper side and at the lower side with the balance weights. The drive comprises a rather large number of parts, which are accommodated in an oil bath case and which are positioned underneath the balance wheel.

This known shaking sieve shows several disadvantages. In the first place the drive needs rather much maintenance, while the life-time is relatively short and the reliability does not always meet the requirements. Furthermore the construction as described leads to unfavourable loads and to a large building height, due to the fact that the distance between the stud of the eccentric on the one hand and the location, where the drive engages the eccentric shaft on the other hand, is relatively large.

It is an object of the present invention to provide a shaking sieve, wherein these disadvantages are removed in an effective way.

For this purpose the shaking sieve according to the invention is characterized in that the balance wheel is also constructed as the drive wheel, with which the drive means is in driving connection.

In this way an extremely simple construction is obtained, while the distance between the place of application of the drive forces and the stud of the eccentric is much smaller than the distance which is possible in the known shaking sieve.

A favourable embodiment of the shaking sieve according to the invention is characterized in that the balance and drive wheel is provided with drive means, such as grooves, at the circumference.

In this way a particularly simple, direct drive of the balance and drive wheel is possible by means of ropes or the like.

Preferably the balance and drive wheel is connected to the outer ring of a bearing, the inner ring of which is supported by the lower frame.

In this case the bearing may be positioned at least substantially at the height of the place of application of the drive forces on the balance and drive wheel.

Furthermore the outer diameter of the bearing may be larger than one half of the outer diameter of the balance and drive wheel.

The position and the relatively large dimensions of this bearing lead to an extremely favourable force transmission.

In order to make the construction still more compact the balance and drive wheel may be provided with an annular recess in its upper surface, wherein the balance weights are received.

Furthermore a top plate may be mounted on the balance and drive wheel, an eccentric head being releasably mounted on this top plate.

The invention will hereafter be elucidated with reference to the drawing, which shows an embodiment of the shaking sieve according to the invention by way of example.

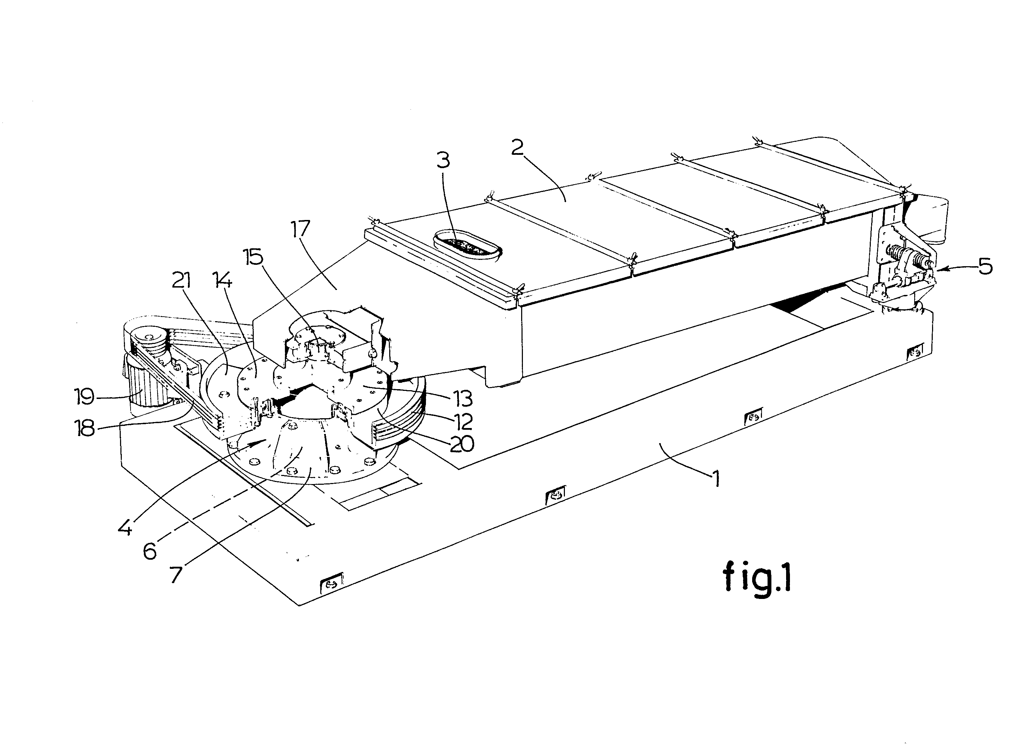

Fig. 1 is a schematic perspective view of an embodiment of the shaking sieve according to the invention, wherein several parts are broken away.

Fig. 2 is a cross-section of an embodiment of the eccentric drive of the shaking sieve according to fig. 1 at a larger scale.

The drawing shows an embodiment of a shaking sieve according to the invention.

This shaking sieve consists of a stationary lower frame 1 and an inclined sifting chamber 2, which is provided at the upper side with an inlet opening 3. The sifting chamber 2 is driven by means of an eccentric supported by the lower frame 1 and indicated as a whole with 4, which eccentric engages the sifting chamber 2 near the upper end of the sifting chamber 2 and forms a first support for the sifting chamber 2.

Near the lower end of the sifting chamber 2 this sifting chamber 2 is movably supported at both sides by means of support elements 5 connected to the lower frame 1, which support elements do not form part of the invention and for this reason are not further described.

The eccentric 4 is supported by a mounting bracket 6, which is provided with a base plate 7, which is mounted on the lower frame 1 by means of bolts.

To the upper end of the mounting bracket 6 a support ring 8 is welded, whereon an inner ring 9 of a ball bearing 10 is connected by means of bolts.

The outer ring 11 of this ball bearing 10 is connected to a balance and drive wheel 12 by means of bolts. On the other hand the outer ring 11 of the ball bearing 10 is releasably connected by means of bolts to a heavy, round top plate 13 having a central hole.

This top plate 13 carries an eccentric head 14 by means of bolts in a detachable and therefore releasable manner, which eccentric head is provided with an upper eccentrically positioned stud 15. This stud 15 is in engagement with a ball bearing 16, which drives the sifting chamber 2 through a drive arm 17.

The balance and drive wheel 12 is provided with V-grooves at the circumference, so that this balance and drive wheel 12 is driven directly by means of V-ropes 18 from the electromotor 19 supported by the lower frame 1.

The balance and drive wheel 12 is provided with an annular recess 20 at the upper side, wherein balance weights 21 are received, which are displaceable and may be locked in different positions.

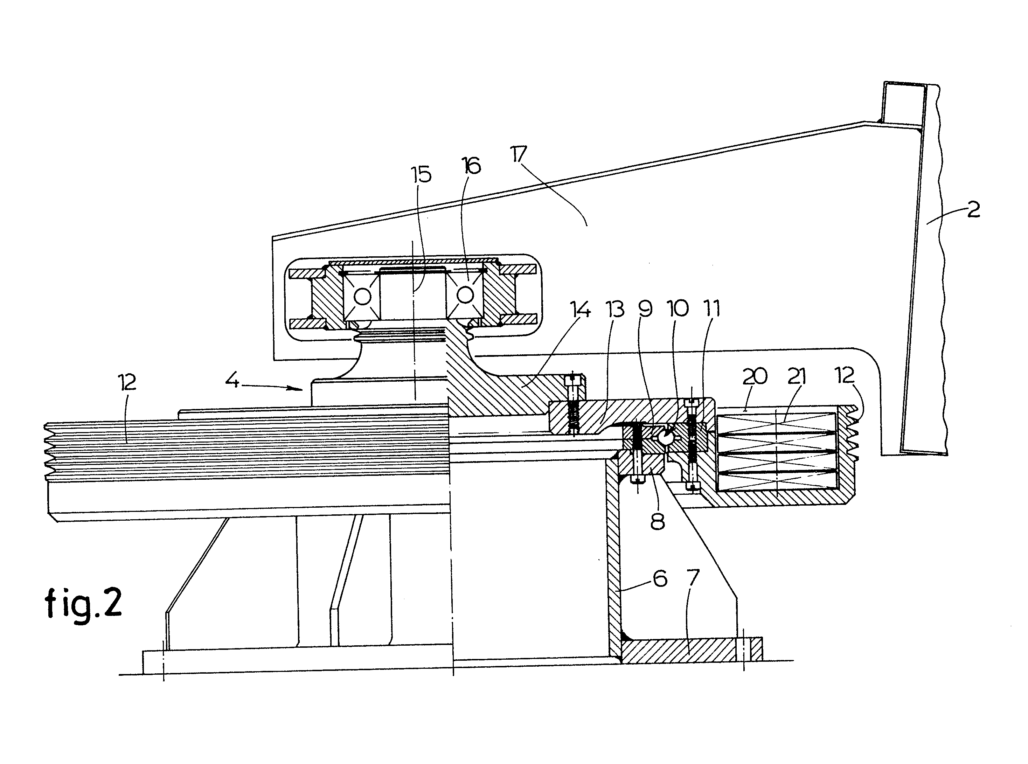

As shown in particular in fig. 2, the ball bearing 10 is approximately positioned at the height of the place of application of the drive forces on the balance and drive wheel 12.

Furthermore the outer diameter of the ball bearing 10 is larger than one half of the outer diameter of the balance and drive wheel 14. In the embodiment shown in the drawing by way of example these outer diameters are approximately in the ratio of 2 to 3.

According to the invention a shaking sieve is provided, wherein the eccentric 4 and its drive have a particularly simple  construction, so that only little maintenance is required and nevertheless a long life-time and a considerable reliability is obtained.

Furthermore the construction of the eccentric 4 and its drive leads to a very favourable transmission of the drive forces.

The invention is not restricted to the embodiment shown in the drawing by way of example, which may be varied in several ways within the scope of the invention.

Claims:

1. Shaking sieve, comprising a fixed lower frame and an inclined sifting chamber, which may be driven by an eccentric which is supported by the lower frame and which engages the sifting chamber near the upper end of the sifting chamber and which also forms a first support for the sifting chamber, while the sifting chamber is movably supported near the lower end at both sides by support elements connected to the lower frame, whereby a balance wheel is connected with the eccentric and is provided with balance weights, which are displaceable with respect to the balance wheel and may be locked in different positions, while a drive means takes care of the drive of the eccentric and the balance wheel, c h a r a c t e r i z e d  in that the balance wheel is also constructed as the drive wheel, with which the drive means is in driving connection.

2. Shaking sieve according to claim 1, c h a r a c t e r i z e d  in that the balance and drive wheel is provided with drive means, such as grooves, at the circumference.

3. Shaking sieve according to claim 1 or 2, c h a r a c t e r i z e d  in that the balance and drive wheel is connected to the outer ring of a bearing, the inner ring of which is supported by the lower frame.

4. Shaking sieve according to claim 3, c h a r a c t e r i z e d  in that the bearing is positioned at least substantially at the height of the place of application of the drive forces on the balance and drive wheel.

5. Shaking sieve according to claim 2 or 3, c h a r a c t e r i z e d  in that the outer diameter of the bearing is larger than one half of the outer diameter of the balance and drive wheel.

6. Shaking sieve according to any one of the preceding claims, c h a r a c t e r i z e d  in that the balance and drive wheel is provided with an annular recess in its upper surface, wherein the balance weights are received.

7. Shaking sieve according to any one of the pre-

ceding claims, c h a r a c t e r i z e d  in that a top plate is mounted on the balance and drive wheel, an eccentric head being releasably mounted on this top plate.

8. Shaking sieve according to claim 7, c h a r a c t e r i z e d  in that the top plate is releasably connected with the outer ring of the bearing.

fig.1

fig.2